Europäisches Patentamt

European Patent Office

Office européen des brevets

(19)

(11) **EP 1 172 983 A2**

(12) **EUROPEAN PATENT APPLICATION**

(43) Date of publication:
**16.01.2002 Bulletin 2002/03**

(51) Int Cl.⁷: **H04L 27/26**

(21) Application number: **01401781.8**

(22) Date of filing: **04.07.2001**

| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(30) Priority: **14.07.2000 IT MI201589**<br><br>(71) Applicant: **ALCATEL**<br>**75008 Paris (FR)** | (72) Inventors:<br>• **Valtolina, Roberto<br>20056 Trezzo sull'Adda (IT)**<br>• **Gallibariggio, Marco<br>20099 Sesto San Giovanni (IT)**<br>• **Spalvieri, Arnaldo<br>20100 Milano (IT)**<br><br>(74) Representative: **Colombo, Stefano Paolo et al<br>Alcatel, Intellectual Property Department,<br>Vimercate Via Trento, 30<br>20059 Vimercate (MI) (IT)** |

(54) **Carrier recovery in multicarrier systems**

(57)    A method and device for the carrier recovery in OFDM systems. The method comprises the steps of: performing, in transmission, a discrete inverse Fourier transform providing for a number of pilot subcarriers to be transmitted together with subcarriers associated with the symbols of a certain constellation, each symbol being associated with a block comprising a number m of bits; and performing, in reception, a Fourier discrete transform of the received signal. The method is characterised by the steps of positioning the pilot subcarriers in a continuous/flanked manner inside the signal to be transmitted; extracting the flanked pilot subcarriers by band-pass filtering the received signal thus obtaining a first filtered signal, and utilising such extracted pilot subcarrier to perform a feed forward correction of the phase error to be carried out before performing said Fourier discrete transform.

Fig. 3

EP 1 172 983 A2

**Description**

The present invention generally relates to the use of OFDM (Orthogonal Frequency Division Multiplexing) technique and in particular relates to the use of such a technique for microwave point-to-point radio links. Still more in particular it relates to a method and device for carrier recovery in such OFDM systems at high working frequency.

The availability on the market of large scale integration electronic components in recent years has allowed the use of OFDM techniques in several fields, among which the DVB (Digital Video Broadcasting) standards for the VHF-UHF terrestrial television broadcasting and DAB (Digital Audio Broadcasting) standard for the transmission of the audio signal. As it is known, the OFDM modulation technique consists in transmitting several flanked orthogonal carriers. The main reason for which this type of modulation has been selected during standardisation to simple-carrier systems is due to the inherent robustness to distortions, which are on the terrestrial channel because of the multipath phenomenon.

The frequency multiplexing with orthogonal carriers is the winning characteristic of the OFDM system but, just for this reason, such orthogonality must be absolutely kept in order to have the correct operation of the system itself.

The OFDM modulation proves to be particularly weak towards the carrier synchronism errors, namely, the performances quickly degrade even for small frequency offsets. It is then necessary to guarantee that the system always operates under locking conditions, and quickly corrects possible sudden frequency offsets (clicks) caused by local oscillators (OLs) in transmission or in reception. It is in fact known that this phenomenon becomes more and more critical as the frequency of the OLs increases, because of an increasing implementation difficulty.

Since, so far, the OFDM modulation has been used in DAB or DVB systems, because the working frequencies are rather low, the phenomenon of the frequency clicks has been neglected in a first approximation. However, in view of a use of the OFDM technique at high frequencies, in particular for microwave point-to-point radio links, namely with working frequencies between 4 and 30 GHz, it is necessary to cope with said frequency click phenomenon.

The main object of the present invention is therefore to provide an effective method and device for the correction of the phase error caused by such frequency clicks, by using pilot symbols, which are known at the receiver.

This and further objects are achieved by a method and device having the characteristics set forth in the independent claims 1 and 9, respectively. Further advantageous characteristics of the methods and device are set forth in the respective dependent claims. All the claims are intended to be an integral part of the present description.

The basic idea of the present invention consists in positioning, in a contiguous manner, pilot carriers inside the transmission data flow so that, when properly extracted in the receive data flow through a band-pass filtering, can be used for a feed-forward correction of the phase error to be carried out before computing the Discrete Fourier Transform (DFT).

There now follows a detailed description of the invention, provided by way of a mere non limiting example, to be read with reference to the attached drawing sheets, wherein:

- Fig. 1 shows a basic schematic representation of a known OFDM modulator transmission side;
- Fig. 2 shows a block diagram of the OFDM modulator of Fig. 1;
- Fig. 3 shows a block diagram of a first embodiment of the receiver according to the present invention;
- Fig. 4 shows a block diagram of a second embodiment of the receiver according to the present invention; and
- Fig. 5 shows a diagram representing the sampling and the piecewise linear interpolation of the phase $\phi$.

Before describing the characteristic features of the present invention, it is believed to be useful to briefly mention in greater detail some aspects of the OFDM modulation technique.

The OFDM technique consists in generating a set of spectra, partially overlapped and orthogonal to each other, of the type sin(x)/(x) in the frequency domain and of rectangular pulses in the time domain, correspondingly. It is a multitone system taking benefit from the fact that the signal to be transmitted is generated by Fourier Transform that combines modulation, multiplexing and pulse shaping into a single operation.

Each carrier is modulated according to a fixed constellation ,chosen from the xPSK or xQAM family (for instance QPSK, 16QAM, 64 QAM, etc.., depending on the characteristics of the channel). The bit sequence (BS) coming into the OFDM modulator is subdivided, at each time interval $T_S$, into N m-bit blocks; a complex number $X_{i,k}$ is associated with each block, the complex number representing a symbol of the constellation that has been chosen. Once a bit string has been mapped into a symbol sequence, each symbol is associated with one of the subcarriers so that a vector of N sequential symbols will correspond to a system of N different carriers. The sum of the carriers constitutes the signal $x_i(t)$ associated with the so-called OFDM symbol and that can be qualitatively represented as:

$$x_i(t) = \sum_{k=0}^{N-1} X_{i,k} e^{j 2\pi f_k t} rect_{T_S}(t - iT_s)$$

The overall signal $x(t)$ is given by the sum of the transmitted OFDM symbols $x_i(t)$, according to the following relation:

$$x(t) = \sum_{i=-\infty}^{+\infty} x_i(t) = \sum_{i=-\infty}^{+\infty} \sum_{k=0}^{N-1} X_{i,k} e^{j 2\pi f_k t} rect_{T_S}(t - iT_s)$$

In order to reduce the spectral occupancy, it is necessary for the carriers to be orthogonal with each other and namely that their scalar product is identically equal to zero, or that they hence satisfy the following analytic condition:

$$\int_0^T e^{j 2\pi f_k t} e^{j 2\pi f_h t} dt = 0 \text{ per } h \neq k$$

This results in that the frequencies of the carriers are chosen equal to integer multiples of the reciprocal of the duration $T_S$:

$$f_k = f_0 + \frac{k\text{-}N/2}{T_s} \qquad k = 0, \cdots, N\text{-}1$$

$f_0$ being the central carrier frequency.

The signal so obtained is sampled with sampling interval $T= T_S/N$, N being the number of carriers. The signal $x(nT)$ that is obtained is therefore:

$$x(nT) = \sum_{i=-\infty}^{+\infty} \sum_{k=0}^{N-1} X_{i,k} e^{j 2\pi k n / K} rect_{T_S}(nT_S / N - iT_s)$$

There is now the need to pass on to analogue signals. The digital-to- analogue conversion of these samples instead generates a continuous signal that will modulate a radio frequency carrier. It will be appreciated that the above expression is equivalent to an inverse discrete Fourier transform (IDFT) of the complex coefficients $X_{i,k}$ except for a factor 1/N. This suggests a way for practically implementing the OFDM modulation: in transmission, an IDFT of the symbols $X_{i,k}$ is carried out while in reception the inverse operation, namely a discrete Fourier transform (or DFT), will be performed.

Hence, taken a vector N of complex symbols to be transmitted, N samples $x_n$ of the OFDM symbol will be transmitted, with:

$$\{x_{i,n}\} = IDFT\{X_{i,k}\}$$

or

$$\{x_{i,n}\} = \frac{1}{N} \sum_{k=0}^{N-1} X_{i,k} e^{+j\frac{2\pi}{N}kn}$$

whereas in reception

$$DFT \{x_{i,n}\} = \{X_{i,k}\}$$

In case of intersymbol interference caused by the transmission channel, the orthogonality properties between the signals can fail. Inside the time $T_S$ that is available for transmitting the OFDM symbol, a guard time $T_g$ is derived so that the echoes, or signal reflections, that in reception fall inside this interval are used in a constructive manner in order to restore the main signal. Hence we will have:

$$T_S = T_u + T_g$$

where $T_u$ is the usable portion of the transmitted signal (equal to $N \cdot T$), $T_g$ is the guard time, $T_S$ is the total duration of the transmitted OFDM symbol; and $T$ is the time associated with a QAM symbol.

Moreover, the OFDM signal so defined can use part of the available carriers, called pilot carriers, to transmit symbols that are known to the receiver, to be able to perform the channel equalisation or to restore the symbol or carriers synchronisation.

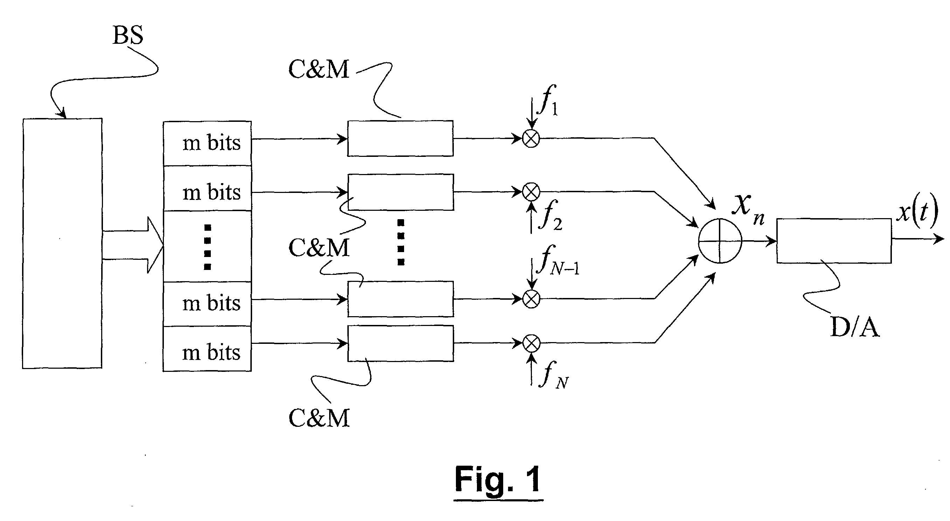

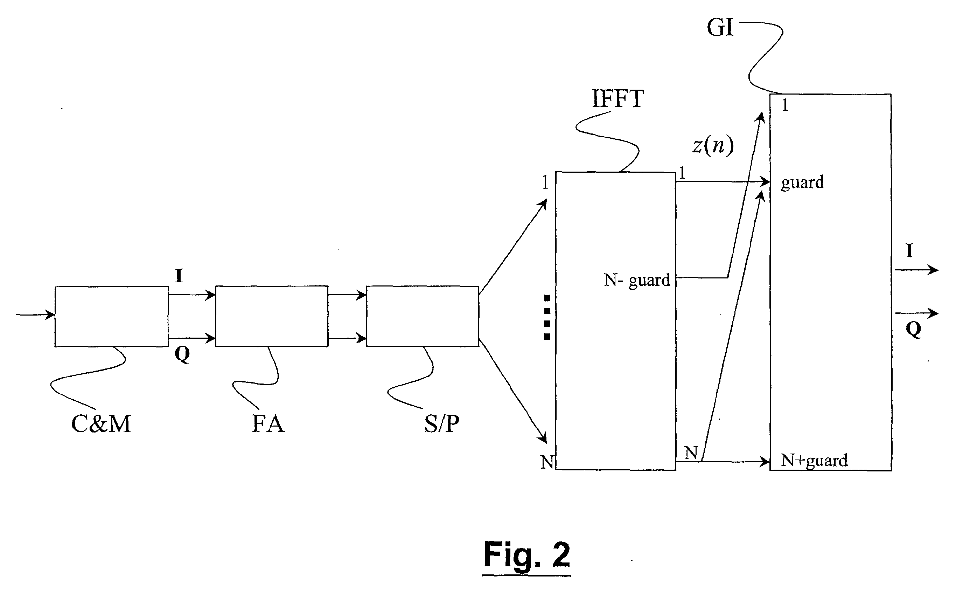

Figs. 1 and 2 respectively represent a basic diagram of the OFDM signal generation and the main functional block diagrams forming the modulator. The stored bit sequence (BS) to be transmitted is subdivided into N blocks, with each block having $m$ bits (for instance, $m$=6 for a constellation of symbols chosen from the 64 QAM family). The bit blocks enter coding and mapping blocks (C&M) where, associated with each of them is a symbol of the constellation. Then they are multiplied by the various carriers $f_1$, $f_2$, ..., $f_N$ (namely, each symbol is associated with a carrier). Block D/A is an analogue to digital converter that converts a signal obtained from the sum of the various carriers multiplied by the corresponding coded information.

In practice, it is stressed that the diagram of Fig. 1 depicts how the OFDM signal is theoretically generated; but in fact it is generated by means of a chip (see IFFT block in Fig. 2), easily available on the market, capable of performing the same operation in significantly restricted spaces with higher speed and reliability. In Fig. 2, FA designates a frame adaptation block for the data handling (FA receives at its input the QAM complex symbol); S/P is a block that carries out a serial-to-parallel conversion; IFFT is a signal generation block that performs a fast Fourier transform; and GI is a guard insertion block.

The frequency click effect ($\Delta f$) on the OFDM signal is of two types: on one side, it results in a phase rotation for every symbol, on the other side it results in a loss of orthogonality between the carriers in the same symbol that therefore interfere with one another. This latter aspect, typical of the OFDM modulation, is the one that makes the problem of the carrier synchronisation much more critical as compared with the case of a single carrier system.

It can be proved that the effect of a frequency click $\Delta f$ is:

$$\{z_{i,n}\} = \left\{ \sum_{k=0}^{N-1} e^{+j\pi(N-1)\Delta fT} \frac{sin(\pi N\Delta fT)}{N sin(\pi\Delta fT)} X_{i,k} + I(n) \right\}$$

Therefore, the effects of a frequency click are two: i) a reduction in the symbol amplitude by a factor equal to $\frac{sin(\pi N\Delta fT)}{sin(\pi\Delta fT)}$, and ii) introduction of a sort of inter symbol interference due to the loss of orthogonality of the carriers.

In view of such considerations, the present invention provides for carrying out the phase error correction at reception side, before performing the DFT operation. On the contrary case, the DFT operator would require to wait for the reception of all the N transmitted samples before being able to start the computation of the transform, thus introducing an unacceptable delay for the phase correction.

In addition to the above, as already said, the basic idea of the present invention consists in positioning pilot carriers in a contiguous manner inside the transmission data flow. Such "flanked" pilot carriers, properly extracted from the receive data flow through a band-pass filtering, are then used for a feed-forward correction of the phase error, to be carried out before performing the DFT.

The sequence $\{x_{i,n}\}$ to be transmitted, taken at the input of the analogue to digital converter, will then be given by:

$$\{x_{i,n}\} = \frac{1}{N}\left\{ \sum_{k=0}^{k_1-1} X_{i,k} e^{+j\frac{2\pi}{N}kn} + \sum_{k=k_1}^{k_2} A_k e^{+j\frac{2\pi}{N}kn} + \sum_{k=k_2+1}^{N-1} X_{i,k} e^{+j\frac{2\pi}{N}kn} \right\}$$

with $k_1, k_2 \in [0, N-1]$ and where $A_k$ are the xQAM symbols associated with the pilot carriers, i.e. symbols known to the receiver, and $X_{i,k}$ are the xQAM symbols associated with the carriers containing the information to be transmitted.

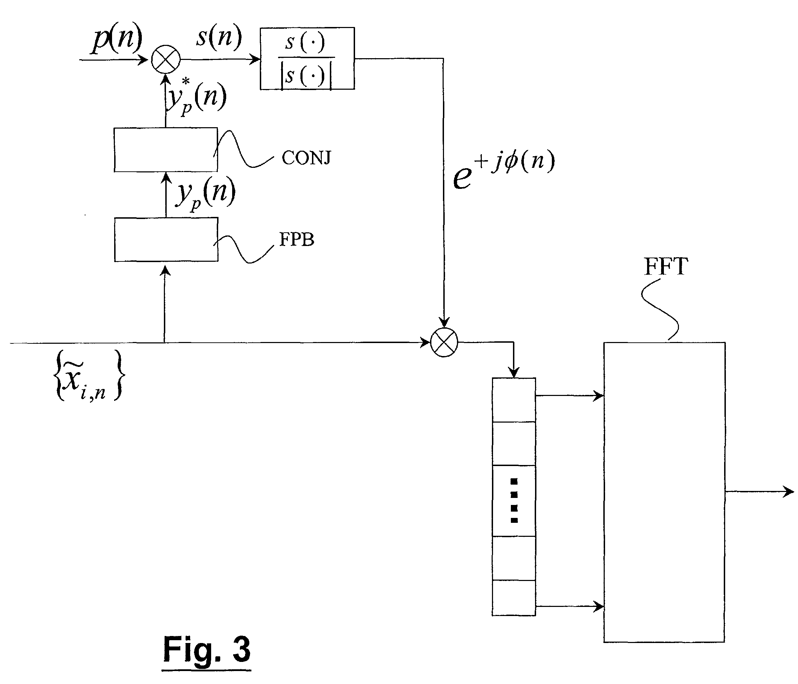

With reference to Fig. 3, the received signal $\{\tilde{x}_n\}$ that, considering an ideal channel, can be held to be equal to $\{x_{i,n}\}$, is properly band-pass filtered (FBP) in order to isolate the pilot carriers, obtaining a signal $y_p(n)$. For instance, an ideal band-pass filtering, adapted to the pilot carriers (having pass band centred on the pilot block), can be performed.

A complex conjugate operation (see block CONJ) is performed on the signal $y_p(n)$, thus thus obtaining a signal $y*_p(n)$.

The signal $y*_p(n)$ is multiplied by a local replica of the pilot symbols, namely by

$$p(n) = \frac{1}{N}\left\{ \sum_{k=k_1}^{k_2} A_k e^{+j\frac{2\pi}{N}kn} \right\},$$

generating a signal $s(n)$.

The information on the phase of the signal $s(n)$ is then extracted through a block that, upon receipt of a vector at its input, calculates the unit vector related thereto by dividing every sample by its module and outputting a signal of the type $e^{+j\phi(n)}$.

The correction is performed by multiplying the received signal $\{\tilde{x}_n\}$ by the signal $e^{+j\phi(n)}$ that was generated as indicated above.

Lets consider now, by way of a non limiting example, the presence of a frequency click $\Delta f$ occurring at the instant $n_\tau$ (with $0 \le n_\tau \le N-1$). The received signal $\{\tilde{x}_{i,n}\}$ will be:

$$\widetilde{x}_{i,n} = \begin{cases} x_{i,n} & n < n_\tau \\ e^{+j2\pi\Delta f(n-n_\tau)} \cdot x_{i,n} & n \ge n_\tau \end{cases}$$

The output of the band-pass filter FPB (still in the ideal case) and except for an unessential multiplication factor $^1/_N2$ will be:

$$y_p(n) = \begin{cases} \displaystyle\sum_{k=k_1}^{k_2} A_k e^{+j\frac{2\pi}{N}kn} & n < n_\tau \\ e^{+j2\pi\Delta f(n-n_\tau)T} \cdot \displaystyle\sum_{k=k_1}^{k_2} G_k A_k e^{+j\frac{2\pi}{N}kn} & n \ge n_\tau \end{cases}$$

where $G_k$ is a term that depends on the way the filtering is realised and on the frequency click which is present. Obviously, for adapted filtering and $\Delta f$ null, it follows $G_k = 1$ for every K, whereas at the opposite end for $\Delta f$ greater than ($k_2$

- $k_1$)/$T$ one will have $G_k = 0$ .

The multiplication of the locally generated pilot signal $p(n)$ and signal $y*_p(n)$ gives the following signal as a result:

$$s(n) = \begin{cases} \left\{ \displaystyle\sum_{k=k_1}^{k_2} A_k e^{+j\frac{2\pi}{N}kn} \right\} \cdot \left\{ \displaystyle\sum_{k=k_1}^{k_2} A_k^* e^{-j\frac{2\pi}{N}kn} \right\} & n < n_\tau \\ e^{-j2\pi\Delta f(n-n_\tau)T} \cdot \left\{ \displaystyle\sum_{k=k_1}^{k_2} A_k e^{+j\frac{2\pi}{N}kn} \right\} \cdot \left\{ \displaystyle\sum_{k=k_1}^{k_2} G_k A_k^* e^{-j\frac{2\pi}{N}kn} \right\} & n \geq n_\tau \end{cases}$$

In the first term, the product will be real, whereas in the second term there is a phase proportional to the click amplitude.

Considering the associated unit vector, one obtains that

$$e^{+j\phi(n)} = \begin{cases} 1 & n < n_\tau \\ e^{-j2\pi\Delta f(n-n_\tau)T} + I(n) & n \geq n_\tau \end{cases}$$

$I(n)$ being a generic disturbance term that takes into account the fact that, in case of clicks and/or non ideal filterings, it is not assured that $G_k = 1$ for every $k$. The term $I(n)$ is a generic distortion that can be anyway considered negligible provided that the quantity $k_2 - k_1$, i.e. the number of pilot carriers, is not significantly low.

The signal $e^{+j\phi(n)}$ must be then multiplied by the received signal $\{\tilde{x}_{i,n}\}$,, correcting the phase error introduced by the frequency click. An FFT is then performed on the signal so obtained and the result is sent to the decision circuit (not shown).

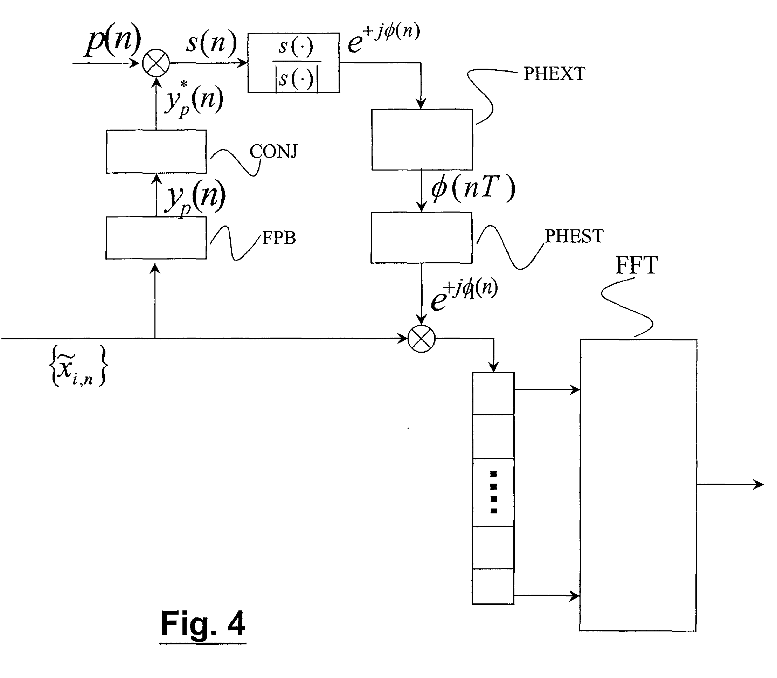

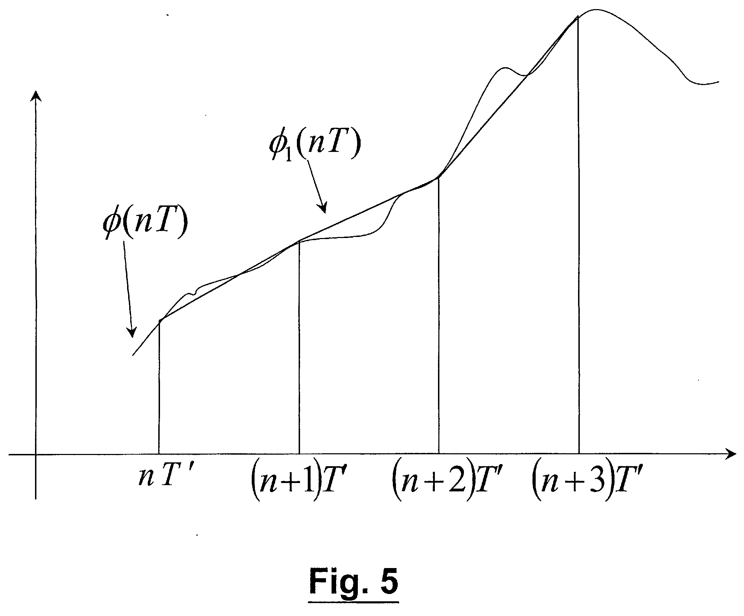

A second embodiment of the carrier recovery device according to the present invention is shown in Fig. 4. The difference consists in the steps of subsampling the phase $\phi(n)$ and in performing a piecewise linear interpolation between the various phase estimates. With reference to Fig. 4, let $\phi_1(nT)$ be the phase information (PHEXT) extracted from $\phi(nT)$ after a proper unwrapping operation and let $\phi_1(nT')$ be a subsampled replica thereof (PHEST) with $T' = pT$, $p$ being a non-zero integer. At this point it is possible to perform a piecewise linear interpolation, according to the basic diagram illustrated in Fig. 5, between two subsequent phase estimates, e.g. $\phi_1(nT')$ and $\phi_1((n + 1)T')$, to obtain $\phi_1(nT)$.

According to the invention, all the pilot carriers are located in contiguous positions. However they can be used for a channel estimation, if the channel is slowly variable, as it is the one for the point-to-point radio links, thus shifting, at every OFDM symbol, the portion of spectrum reserved to the pilot carriers.

At this point it will be understood how the transmitter device for implementing the present invention is practically unchanged as compared with the known devices, apart from the mapping means (C&M).

It is apparent that several modifications and adaptations can be imparted to the present invention without departing from the scope defined by the following claims which are intended to be an integral part of the present description.

**Claims**

1. Method for the carrier recovery in OFDM systems, the method comprising the steps of:

   at transmission side, performing an inverse discrete Fourier transform (IDFT) providing a number of pilot subcarriers to be transmitted together with subcarriers ($f_1$, $f_2$, ..., $f_N$) associated with the symbols of a certain constellation (xPSK, xQAM), each symbol being associated with a block comprising a number (m) of bits;
   at reception side, performing a discrete Fourier transform (DFT) of the received signal,

   **characterised by** the steps of:

positioning the pilot subcarriers in a contiguous/flanked manner inside the signal to be transmitted $(\{x_{i,n}\})$;

extracting the flanked pilot subcarriers by band-pass filtering (FPB) the received signal $(\{\tilde{x}_{i,n}\})$, thus obtaining a first filtered signal $(y_p(n))$; and

utilising such extracted pilot subcarriers to perform a feed-forward correction of the phase error to be carried out before performing said discrete Fourier transform (DFT).

2. Method according to claim 1, **characterised by** comprising the further step of subjecting the first filtering signal $(y_p(n))$ to a complex conjugate operation (CONJ), thus obtaining a second signal $(y*_p(n))$.

3. Method according to claim 2, **characterised by** comprising the further steps of:

providing a local replica of the pilot symbols $(p(n))$; and

multiplying said second signal $(y*_p(n))$ by the local replica of the pilot symbols $(p(n))$, thus obtaining a third signal $(s(n))$.

4. Method according to claim 3, **characterised by** comprising the further step of extracting information on the phase $(\phi(n))$ of the third signal through unit vector computation means, for obtaining a fourth signal $(e^{+j\phi(n)})$.

5. Method according to claim 4, **characterised by** comprising the further step of subsampling the extracted phase $(\phi(n))$ and performing a piecewise linear interpolation of the phase information for obtaining a fourth signal $(e^{+j\phi 1(n)})$.

6. Method according to claim 4 or 5, **characterised by** comprising the additional step of multiplying the fourth signal $(e^{+j\phi(n)}, e^{+j\phi 1(n)})$ by the received signal $(\{\tilde{x}_{i,n}\})$.

7. Method according to any of claims 1 to 6, **characterised by** comprising the additional step of shifting, at every OFDM symbol, the portion of spectrum which is available for said pilot subcarriers.

8. Method according to any of the preceding claims, **characterised in that** said signal to be transmitted is a radio signal in high-frequency point-to-point radio links.

9. Device for the carrier recovery in OFDM systems comprising:

means for receiving a signal $(\{\tilde{x}_{i,n}\})$ comprising pilot sub carriers and sub carriers $(f_1, f_2,..., f_N)$ associated with the symbols of a certain constellation (xPSK, xQAM), each symbol being associated with a block comprising a number (m) of bits; and

means for performing a discrete Fourier transform (DFT),

**characterised in that** the pilot subcarriers are positioned in a contiguous/flanked manner inside the signal to be retransmitted $(\{x_{i,n}\})$ and **in that** said device further comprises:

means for extracting the flanked pilot subcarriers by band pass filtering (FPB) the received signal $(\{\tilde{x}_{i,n}\})$, obtaining a first filtered signal $(y_p(n))$; and

means for performing, by utilising such extracted pilot subcarriers, a feed-forward correction of the phase error to be carried out before performing said discrete Fourier transform.

10. Device according to claim 9, **characterised by** comprising means for subjecting the first filtered signal $(y_p(n))$ to a complex conjugate operation (CONJ), thus obtaining a second signal $(y*_p(n))$.

11. Device according to claim 10, **characterised by** comprising means for providing a local replica of the pilot symbols $(p(n))$ and means for multiplying said second signal $(y*_p(n))$ by the local replica of the pilot symbols $(p(n))$, thus obtaining a third signal $(s(n))$.

12. Device according to claim 11, **characterised by** comprising means for extracting information on the phase $(\phi(n))$ of the third signal through unit vector computation means, for obtaining a fourth signal $(e^{+j\phi(n)})$.

13. Device according to claim 12, **characterised by** comprising means for subsampling the extracted phase $(\phi(n))$ and performing a piecewise linear interpolation of the phase information, for obtaining a fourth signal $(e^{+j\phi 1(n)})$.

**14.** Device according to claim 12 or 13, **characterised by** comprising means for multiplying the fourth signal ($e^{+j\phi(n)}$, $e^{+j\phi 1(n)}$) by the received signal ($\{\tilde{x}_{i,n}\}$).

**15.** Device according to any of claims 9 to 14, **characterised in that** said signal to be transmitted is a radio signal in high-frequency point-to-point radio links.

Fig. 1

**Fig. 2**

Fig. 3

**Fig. 4**

**Fig. 5**

EP 1 172 983 A2